(19) **Europäisches Patentamt**

**European Patent Office**

**Office européen des brevets**

(11) **EP 1 052 090 A1**

(12) **EUROPEAN PATENT APPLICATION**
published in accordance with Art. 158(3) EPC

(43) Date of publication:
15.11.2000 Bulletin 2000/46

(51) Int. Cl.$^7$: **B32B 27/28**

(21) Application number: 99901899.7

(22) Date of filing: 28.01.1999

(86) International application number:
PCT/JP99/00359

(87) International publication number:
WO 99/38687 (05.08.1999 Gazette 1999/31)

(84) Designated Contracting States:
**DE FR GB IT NL**

(30) Priority: 29.01.1998 JP 3210898

(71) Applicant:
**KUREHA KAGAKU KOGYO KABUSHIKI KAISHA**
**Chuo-ku, Tokyo 103-8552 (JP)**

(72) Inventors:
• **UEYAMA, Takahisa,**
**Kureha Kagaku Kogyo K.K.**
**Niihari-gun, Ibaraki 311-3436 (JP)**

• **ITO, Tadayoshi,**
**Kureha Kagaku Kogyo K.K.**
**Niihari-gun, Ibaraki 311-3436 (JP)**
• **TOBITA, Hisanori,**
**Kureha Kagaku Kogyo K.K.**
**Niihari-gun, Ibaraki 311-3436 (JP)**

(74) Representative:
**Bakkum, Ruben Joseph**
**van Exter Polak & Charlouis B.V.,**
**P.O. Box 3241**
**2280 GE  Rijswijk (NL)**

(54) **THERMOPLASTIC MULTILAYERED FILM**

(57)    A thermoplastic multi-layer film comprising a gas barrier resin layer (C) and at least one intermediate resin layer (D) between an outer resin layer (A) and an inner sealing resin layer (B), wherein the inner sealing resin layer (B) is a layer (B1) of an ionomer resin having an ionization degree higher than 15%, but not higher than 25%, an intermediate resin layer (D1) is laminated in direct contiguity with the ionomer resin layer (B1), and the thickness of the intermediate resin layer (D1) is greater than the thickness of the ionomer resin layer (B1). The film has excellent stretchability, heat shrinkability, sealing properties and self-welding property.

## Description

TECHNICAL FIELD

The present invention relates to a thermoplastic multi-layer film having a plurality of thermoplastic resin layers laminated on one another, and more particularly to a thermoplastic multi-layer film which is good in stretchability and also excellent in heat shrinkability, and particularly far excellent in sealing strength upon impact and self-welding property. The thermoplastic multi-layer film according to the present invention is suitable for use as a packaging film for food such as meats.

BACKGROUND ART

There have heretofore been known heat-shrinkable thermoplastic multi-layer films composed of at least an outer resin layer and an inner sealing resin layer, and optionally a gas barrier resin layer and an intermediate resin layer (non-gas barrier thermoplastic resin layer) provided between both inner and outer layers as food packaging films. Various polyolefin resins are generally used as materials for the outer resin layer and the inner sealing resin layer. An adhesive layer is arranged between the respective layers as needed. When an ionomer resin is used as a resin forming the inner sealing resin layer in the thermoplastic multi-layer film of such a laminated structure, the multi-layer film can be provided as a thermoplastic multi-layer film having good stretchability and excellent heat shrinkability. As the ionomer resin, an ionomer resin having an ionization degree (neutralization degree of an acid group) of about 30 to 60% is generally used from the viewpoint of stretchability, heat shrinkability, clarity, gloss, tensile strength, etc.

When the ionomer resin having such a high ionization degree is used in the sealing resin layer of the thermoplastic multi-layer film, however, a multi-layer film having excellent stretchability and heat shrinkability can be provided, but its sealing strength becomes insufficient from the viewpoint of practical use. With respect to the sealing strength upon impact in particular, when a practical test that a thermoplastic multi-layer film with an ionomer resin having an ionization degree of about 30 to 60% provided as a sealing resin layer is heat-sealed to produce a bag sample, and a ball 5 kg in weight is dropped on a sealed part of the bag sample through an opening of the bag sample is conducted, the sealed part is easily broken. When the low-temperature sealing strength of the thermoplastic multi-layer film is insufficient as described above, the sealed part is easy to break at the time the bag is opened to place a product to be packaged into the bag. Therefore, the bag cannot be applied to, for example, an automatic packaging process which is exposed to heavy stress.

On the other hand, a thermoplastic multi-layer film provided with a layer of very low density polyethylene (VLDPE) as a sealing resin layer is proposed (Japanese Patent Publication No. 78065/1991). When the sealing resin layer is formed in a thickness required to obtain sufficient sealing strength, however, the stretchability of the resulting multi-layer film is lowered, and its hot-water shrink (in particular, at 70 to 80°C) and self-welding property also tend to become insufficient.

DISCLOSURE OF THE INVENTION

It is an object of the present invention to provide a thermoplastic multi-layer film which is excellent in sealing properties such as sealing strength, and self-welding property while retaining properties such as good stretchability and heat shrinkability that the conventional ionomer resin layer has.

The present inventors have carried out an extensive investigation with a view toward overcoming the above-described problems involved in the prior art. As a result, it has been found that when ① a layer of an ionomer resin having an ionization degree higher than 15%, but not higher than 25% is used as a sealing resin layer in a thermoplastic multi-layer film, ② an intermediate resin layer directly contiguous to the ionomer resin layer is provided, and ③ the thickness of the intermediate resin layer is greater than that of the ionomer resin layer, the sealing properties and self-welding property of the multi-layer film can be improved without impairing the stretchability and heat shrinkability thereof.

The intermediate resin layer is laminated in direct contiguity with the ionomer resin layer without interposing an adhesive layer therebetween. The thickness of the intermediate resin layer is preferably 2 to 10 times, more preferably 4.5 to 10 times the thickness of the ionomer resin layer. In particular, when the thickness of the intermediate resin layer is controlled to 4.5 to 10 times the thickness of the ionomer resin layer, and the resultant thermoplastic multi-layer film is radiation-crosslinked, the heat shrinkability and sealing properties of the multi-layer film can be markedly improved. The present invention has been led to completion on the bases of these findings.

According to the present invention, there is thus provided a thermoplastic multi-layer film comprising a gas barrier resin layer (C) and at least one intermediate resin layer (D) between an outer resin layer (A) and an inner sealing resin layer (B), wherein

(1) the inner sealing resin layer (B) is a layer (B1) of an ionomer resin having an ionization degree higher than 15%, but not higher than 25%,

(2) an intermediate resin layer (D1) is laminated in direct contiguity with the ionomer resin layer (B1), and

(3) the thickness of the intermediate resin layer (D1) is greater than the thickness of the ionomer resin layer (B1).

According to the present invention, there is also provided a thermoplastic multi-layer film comprising at least an inner sealing resin layer (B) and a resin layer (D1) laminated in direct contiguity with the inner sealing resin layer, wherein

(1) the inner sealing resin layer (B) is a layer (B1) of an ionomer resin having an ionization degree higher than 15%, but not higher than 25%,

(2) the resin layer (D1) is a polyolefin resin layer ($PO_1$) laminated in direct contiguity with the ionomer resin layer (B1),

(3) the thickness of the polyolefin resin layer ($PO_1$) is 4.5 to 10 times the thickness of the ionomer resin layer (B1), and

(4) the multi-layer film is irradiation-crosslinked by ionizing radiation.

BEST MODE FOR CARRYING OUT THE INVENTION

Ionomer resin:

In the present invention, a layer composed of an ionomer resin having an ionization degree higher than 15%, but not higher than 25% is used as a inner sealing resin layer of the thermoplastic multi-layer film. As examples of the ionomer resin, may be mentioned resins obtained by using, as a base polymer, an ethylene-unsaturated carboxylic acid copolymer or an ethylene-ethylenically unsaturated carboxylic acid-ethylenically unsaturated carboxylic ester terpolymer and neutralizing carboxyl groups in the copolymer or terpolymer with a cation.

A copolymerizing proportion of the ethylenically unsaturated carboxylic acid in these copolymers is generally 3 to 20 wt.%, preferably 5 to 15 wt.%, more preferably 7 to 13 wt.%. Accordingly, the ethylene-ethylenically unsaturated carboxylic acid copolymers are copolymer composed of ethylene in a proportion of generally 80 to 97 wt.%, preferably 85 to 95 wt.%, more preferably 87 to 93 wt.% and an ethylenically unsaturated carboxylic acid in a proportion of generally 3 to 20 wt.%, preferably 5 to 15 wt.%, more preferably 7 to 13 wt.%. Preferable examples of the ethylenically unsaturated carboxylic acid include methacrylic acid and acrylic acid.

A copolymerizing proportion of the ethylenically unsaturated carboxylic ester is generally 3 to 30 wt.%, preferably 4 to 15 wt.%, more preferably 5 to 10 wt.%. Accordingly, the ethylene-ethylenically unsaturated carboxylic acid-ethylenically unsaturated carboxylic ester terpolymers are copolymer composed of ethylene in a proportion of generally 50 to 94 wt.%, preferably 70 to 91 wt.%, more preferably 77 to 88 wt.%, an ethylenically unsaturated carboxylic acid in a proportion of generally 3 to 20 wt.%, preferably 5 to 15 wt.%, more preferably 7 to 13 wt.% and an ethylenically unsaturated carboxylic ester in a proportion of generally 3 to 30 wt.%, preferably 4 to 15 wt.%, more preferably 5 to 10 wt.%. Preferable examples of the ethylenically unsaturated carboxylic ester include $C_{1-6}$ alkyl esters of acrylic acid or methacrylic acid. As examples of the alkyl group, may be mentioned methyl, ethyl, n-propyl, isopropyl, n-butyl, isobutyl, pentyl and hexyl group.

If the copolymerizing proportion of the ethylenically unsaturated carboxylic acid is too high in these copolymers, the resulting multi-layer film shows a tendency to lower its sealing strength. If the copolymerizing proportion of the ethylenically unsaturated carboxylic ester is too high in the terpolymers on the other hand, the bag-making property and sealing strength of the resulting multi-layer film are deteriorated. When the copolymerizing proportions of the ethylenically unsaturated carboxylic acid and ethylenically unsaturated carboxylic ester fall within the respective ranges described above, a multi-layer film having good stretchability and heat shrinkability and also improved in sealing strength and bag-making property is provided.

In the present invention, it is preferable to use, as the ionomer resin, a resin obtained by neutralizing a carboxyl group in an ethylene-ethylenically unsaturated carboxylic acid-ethylenically unsaturated carboxylic ester terpolymer with a cation. In particular, when an ionomer resin including, as a base polymer, the above terpolymer, the copolymerizing proportion of the ethylenically unsaturated carboxylic ester of which is 15 wt.% or lower, is used, a thermoplastic multi-layer film which is excellent in sealing strength upon impact and low-temperature heat shrinkability can be provided. If the copolymerizing proportion of the ethylenically unsaturated carboxylic ester is too high, the resulting multi-layer film shows a tendency to deteriorate its bag-making property due to excess flexibility and surface tackiness and also lower its sealing strength. As the terpolymer, an ethylene-(meth)acrylic acid-alkyl (meth)acrylate such as an ethylene-methacrylic acid-isobutyl acrylate terpolymer is preferred. The terpolymer, the copolymerizing proportion of the ethylenically unsaturated carboxylic ester of which is 15wt.% or lower, is preferably a terpolymer composed of 70 to 91 wt.% of ethylene, 5 to 15 wt.% of (meth)acrylic acid and 4 to 15 wt.% of a (meth)acrylic ester, more preferably a terpolymer composed of 77 to 88 wt.% of ethylene, 7 to 13 wt.% of (meth)acrylic acid and 5 to 10 wt.% of a (meth)acrylic ester.

As examples of the cation used in the neutralization of the carboxyl groups, may be mentioned metal ions such as $Na^+$, $K^+$, $Li^+$, $Cs^+$, $Ag^+$, $Hg^+$, $Cu^+$, $Mg^{2+}$, $Zn^{2+}$, $Be^{2+}$, $Ca^{2+}$, $Ba^{2+}$, $Cu^{2+}$, $Cd^{2+}$, $Hg^{2+}$, $Sn^{2+}$, $Pb^{2+}$, $Fe^{2+}$, $Co^{2+}$, $Ni^{2+}$, $Al^{3+}$, $Sc^{3+}$, $Fe^{3+}$ and $Y^{3+}$, and organic amines. Of these, $Na^+$, $K^+$, $Ca^{2+}$ and $Zn^{2+}$ are preferably used.

In the present invention, the ionomer resin having an ionization degree higher than 15%, but not higher than 25% is used. The ionization degree is preferably 16 to 25%, more preferably 17 to 25%. If the ionization degree of the ionomer resin is too high, higher sealing strength required from the viewpoint of practical use cannot be achieved. When an unionized ethylene-ethylenically unsaturated carboxylic acid-ethylenically unsaturated carboxylic ester terpolymer (for example, an ethylene-methacrylic acid-isobutyl acrylate terpolymer) is used, the resulting multi-layer film tends to lower its stretchability and also cause blocking (sticking between inner surfaces of a film in a tubular film extrusion process). If the ionization degree is too high, the low-temperature sealing strength of the resulting multi-layer film is lowered, so that it is difficult to achieve high sealing strength. In particular, when a general-purpose ionomer resin having an ionization degree of 30 to 60% is used as the sealing resin, a sealed part of a bag made of the resulting multi-layer film cannot withstand the above-described drop impact test.

The ionomer resin having an ionization degree higher than 15%, but not higher than 25% may be prepared by blending two or more ionomer resins each having a different ionization degree. The ionization degree of the respective ionomer resins making up an ionomer resin blend may be not higher than 15% or higher than 25% so far as the ionization degree of the blend is higher than 15%, but not higher than 25%.

The ionomer resin may be blended with, for example, an ethylene-methacrylic acid copolymer or an ethylene-methacrylic acid-acrylic ester terpolymer before use. In this case, the blending proportion of the ionomer resin is generally at least 50 wt.%, preferably at least 70 wt.%, more preferably at least 90 wt.%.

Thermoplastic multi-layer film:

The thermoplastic multi-layer film according to the present invention comprises an outer resin layer (A) and an inner sealing resin layer (B), and has a layer structure that a gas barrier resin layer (C) and at least one an intermediate resin layer (D) are provided between both inner and outer layers. As needed, an adhesive layer may be provided between the respective layers. In order to enhance the adhesion property of the gas barrier resin layer to other resin layers in particular, it is preferable to use the adhesive layer.

In the present invention, an layer (B1) of an ionomer resin having an ionization degree higher than 15%, but not higher than 25% is arranged as the inner sealing resin layer (B) of the thermoplastic multi-layer film. This arrangement permits improvement of low-temperature sealing strength compared with the case where a general-purpose ionomer resin having a higher ionization degree is used.

The layer (B1) of the ionomer resin having an ionization degree higher than 15%, but not higher than 25% is excellent in low-temperature sealing properties compared with a layer of the ionomer resin having a higher ionization degree, but a further device is required to make a marked improvement. In the present invention, a intermediate resin layer (D1) is therefore laminated in direct contiguity with the ionomer resin layer (B1), and the thickness of the intermediate resin layer (D1) is made greater than the thickness of the ionomer resin layer (B1). As the intermediate resin layer (D1) directly contiguous to the ionomer resin layer (B1), is preferred a polyolefin resin layer $(PO_1)$. When the thickness of the intermediate resin layer (D1) directly contiguous to the ionomer resin layer (B1) is made greater than the thickness of the ionomer resin layer (B1), the sealing properties of the resulting multi-layer film can be markedly improved. In addition, the provision of the intermediate resin layer (D1) such as the polyolefin resin layer $(PO_1)$ permits reduction in the thickness of the ionomer resin layer (B1) and is hence economical.

Preferable examples of the polyolefin resin used in the polyolefin resin layer $(PO_1)$ include ethylene-vinyl acetate copolymers having a vinyl acetate content of 5 to 30 wt.%, ethylene-acrylic ester copolymers having an acrylic ester content of 5 to 30 wt.%, ethylene-methacrylic acid-acrylic ester terpolymers, and ethyl-$\alpha$-olefin copolymers having a density of 0.880 to 0.895 $g/cm^3$. Examples of the ethylene-acrylic ester copolymers include ethylene-methyl acrylate copolymers, ethylene-ethyl acrylate copolymers and ethylene-butyl acrylate copolymers. These polyolefin resins may be used either singly or in any combination thereof. An ethylene-vinyl acetate copolymer (EVA) is particularly preferred as the polyolefin resin used in the polyolefin resin layer $(PO_1)$. The vinyl acetate content thereof is generally 5 to 30 wt.%, preferably 10 to 25 wt.%, more preferably 12 to 20 wt.%.

When the layer (B1) of the ionomer resin having an ionization degree higher than 15%, but not higher than 25% and the layer $(PO_1)$ of the polyolefin resin such as EVA are provided in direct contiguity with each other, a thermoplastic multi-layer film having excellent heat shrinkability as demonstrated by the heat shrink of at least 40% in its transverse direction (TD) at 75°C can be obtained with ease. When the general-purpose ionomer resin having a higher ionization degree is used, the ionomer resin layer may be hard to be bonded to the polyolefin resin layer $(PO_1)$ in some

cases.

As a thermoplastic resin forming the outer resin layer (A), is preferred a polyolefin resin layer (PO). As the polyolefin resin used in the polyolefin resin layer (PO), the same polyolefin resin as that used in the polyolefin resin layer (PO$_1$) of the intermediate resin layer (D1) may be used. Besides such polyolefin resins, polypropylene resins and ethylene-$\alpha$-olefin copolymers obtained by using a Ziegler-Natta catalyst or a metallocene catalyst (including a constrained geometry catalyst) may be preferably used. Examples of the ethylene-$\alpha$-olefin copolymers include copolymers of ethylene and a small amount of an $\alpha$-olefin having 4 to 18 carbon atoms, such as 1-butene, 1-pentene, 4-methyl-1-pentene or 1-octene. More specifically, the so-called linear low density polyethylene (LLDPE) and very or ultra low density polyethylene (VLDPE or ULDPE) are mentioned. Of these, LLDPE, VLDPE (ULDPE) and ethylene-vinyl acetate copolymers (EVA) having a vinyl acetate content of 20 wt.% or lower (generally 12 to 20 wt.%) are preferred from the viewpoints of stretchability and the like. These polyolefin resins may be used either singly or in any combination thereof.

As examples of a gas barrier resin used in the gas barrier resin layer (C), may be mentioned polyvinylidene chloride (PVDC) resins, ethylene-vinyl alcohol copolymer (EVOH) resins and polyamide resins. Of these, PVDC is particularly preferred. PVDC is a copolymer composed of 65 to 95 wt.% of vinylidene chloride and 5 to 35 wt.% of at least one of unsaturated monomers copolymerizable therewith. Examples of the copolymerizable unsaturated monomers include vinyl chloride and alkyl esters of (meth)acrylic acid, such as methyl (meth)acrylate. To PVDC, may be added a polyolefin resin (which may be a regenerated product from multi-layer films) such as EVA, a plasticizer, a stabilizer and the like, as needed.

As a resin used in said at least one intermediate resin layer (D), the same polyolefin resin as that used in such a polyolefin resin layer (PO$_1$) as described above may be suitably used. A blend which is a regenerated product from multi-layer films and contains a polyolefin resin in a proportion of at least 50 wt.% may also be used in the intermediate resin layer (D). The above-described polyolefin resin layer (D1) is also an intermediate resin layer (D). An intermediate layer other than the above includes, for example, an intermediate resin layer (D2) provided in contiguity with the outer resin layer (A) as desired. Of course, three or more intermediate resin layers (D1, D2, D3 ···) may be provided as needed.

As a polyolefin resin (PO$_2$) used in the intermediate resin layer (D2) laminated in contiguity with the outer resin layer (A) such as the polyolefin resin layer (PO), an ethylene-vinyl acetate copolymer, an ethylene-acrylic ester copolymer, an ethylene-methacrylic acid-isobutyl acrylate terpolymer or the like is preferred. As the resin for the polyolefin resin (PO$_2$) used in the intermediate resin layer (D2), besides the above, an ionomer resin is mentioned. No particular limitation is imposed on the ionization degree of the ionomer resin used in the intermediate resin layer (D2). However, it is preferable to use an ionomer resin having an ionization degree of 15% or lower in order not to very affect the sealing properties of the resulting multi-layer film. These polyolefin resins may be used either singly or in any combination thereof.

Besides these respective resin layers, adhesive layers (E) may be provided as needed. Examples of a resin forming the adhesive layers include ethylene-acrylic ester copolymers having an acrylic ester content of 13 to 28 wt.%, ethylene-vinyl acetate copolymers having a vinyl acetate content of 13 to 28 wt.% and unsaturated carboxylic acid-modified or metal-modified products of the ethylene-acrylic ester copolymers. These adhesive layers are used, for example, between the layer (C) of the gas barrier resin such as PVDC and any other resin layer and between the polyolefin resin layers. When the intermediate resin layer (D1) or (D2) or the outer resin layer (A) is excellent in adhesion property to any other resin layer, the adhesive layer (E) may be omitted.

The thermoplastic multi-layer films according to the present invention can be obtained by melt extruding the thermoplastic resins forming the respective layers into a tube through a ring die using extruders according to the number of laminations. Further, heat shrinkability can be imparted to the resultant tubular film by uniaxially or biaxially stretching the film by a biaxial tubular film extrusion process. No particular limitation is imposed on the draw ratio. However, it is generally about 2 to 7 times in machine and/or transverse directions. Upon the stretching, resin layers are preferably crosslinked by exposure to ionizing radiation such as electron beam. As examples of the resin layers subjected to irradiation crosslinking, may be mentioned the outer resin layer (A), the intermediate resin layer (D2), the intermediate resin layer (D1) and the ionomer resin layer (B1). The irradiation crosslinking is conducted by irradiating the resin layers with ionizing radiation from the side of the outer resin layer (A) of the multi-layer film before the stretching step. When PVDC is used as a gas barrier resin, it is preferred to irradiation-crosslink the outer resin layer (A) and the intermediate resin layer (D2) from the viewpoint of enhancing the stretchability of the resulting multi-layer film. When the crosslinking is conducted by exposure to electron beam, it is preferred to control acceleration voltage and absorbed dose to 150-500 kV and 20-200 kGy, respectively.

As preferable examples of the layer structures of the thermoplastic multi-layer films according to the present invention, may be mentioned the following layer structures:

> 1. Outer resin layer (A)/intermediate resin layer (D2)/adhesive layer/gas barrier resin layer (C)/adhesive layer/intermediate resin layer (D1)/inner sealing resin layer (B);

2. Outer resin layer (A)/intermediate resin layer (D2)/adhesive layer/gas barrier resin layer (C)/ intermediate resin layer (D1)/inner sealing resin layer (B);

3. Outer resin layer (A)/adhesive layer/gas barrier resin layer (C)/adhesive layer/intermediate resin layer (D1)/inner sealing resin layer (B);

4. Outer resin layer (A)/adhesive layer/gas barrier resin layer (C)/intermediate resin layer (D1)/inner sealing resin layer (B);

5. Outer resin layer (A)/intermediate resin layer (D2)/gas barrier resin layer (C)/adhesive layer/intermediate resin layer (D1)/inner sealing resin layer (B);

6. Outer resin layer (A)/intermediate resin layer (D2)/gas barrier resin layer (C)/intermediate resin layer (D1)/inner sealing resin layer (B);

7. Outer resin layer (A)/gas barrier resin layer (C)/adhesive layer/intermediate resin layer (D1)/inner sealing resin layer (B);

8. Outer resin layer (A)/gas barrier resin layer (C)/intermediate resin layer (D1)/inner sealing resin layer (B); and

9. Outer resin layer (A)/intermediate resin layer (D1)/inner sealing resin layer (B).

When the preferable examples of the layer structures of the thermoplastic multi-layer films are expressed in terms of the specific resins used in the respective layers, the following structures may be mentioned:

① Polyolefin resin layer (PO)/polyolefin resin layer (PO$_2$)/adhesive layer/PVDC layer/adhesive layer/polyolefin resin layer (PO$_1$)/ionomer resin layer (B1);

② Polyolefin resin layer (PO)/polyolefin resin layer (PO$_2$)/adhesive layer/PVDC layer/polyolefin resin layer (PO$_1$)/ionomer resin layer (B1);

③ Polyolefin resin layer (PO)/adhesive layer/PVDC layer/adhesive layer/ polyolefin resin layer (PO$_1$)/ionomer resin layer (B1);

④ Polyolefin resin layer (PO)/adhesive layer/PVDC layer/polyolefin resin layer (PO$_1$)/ionomer resin layer (B1);

⑤ Polyolefin resin layer (PO)/polyolefin resin layer (PO$_2$)/PVDC layer/adhesive layer/polyolefin resin layer (PO$_1$)/ionomer resin layer (B1);

⑥ Polyolefin resin layer (PO)/polyolefin resin layer (PO$_2$)/PVDC layer/polyolefin resin layer (PO$_1$)/ionomer resin layer (B1);

⑦ Polyolefin resin layer (PO)/PVDC layer/adhesive layer/polyolefin resin layer (PO$_1$)/ionomer resin layer (B1);

⑧ Polyolefin resin layer (PO)/PVDC layer/polyolefin resin layer (PO$_1$)/ionomer resin layer (B1); and

⑨ Polyolefin resin layer (PO)/polyolefin resin layer (PO$_1$)/ionomer resin layer (B1).

The total thickness of the thermoplastic multi-layer films is generally 20 to 100 μm. The proportions of thickness of the respective layers may be suitably determined as desired. With respect to a thickness ratio of the ionomer resin layer (B1) forming the inner sealing resin layer (B) to the intermediate resin layer (D1) directly contiguous thereto, however, the sealing strength upon impact of the resulting multi-layer film cannot be improved unless the thickness of the ionomer resin layer (B1) is thinner than the intermediate resin layer (D1). A thickness ratio of the intermediate resin layer (D1) to the ionomer resin layer (B1) is generally 1.5 to 20 times, preferably 2 to 10 times, more preferably 4.5 to 10 times. If this ratio is too low, the sealing strength upon impact of the resulting multi-layer film becomes insufficient even if the layer (B1) of the ionomer resin having an ionization degree higher than 15%, but not higher than 25% is arranged as the inner sealing resin layer (B). On the other hand, the sealing strength upon impact of the resulting multi-layer film becomes poor when a general-purpose ionomer resin having a higher ionization degree is used in the inner sealing resin layer (B) though this ratio is satisfactory.

The proportions of thickness of the respective layers are 1 to 35% for the outer resin layer (A), 0 to 50% for the intermediate resin layer (D2), 0 to 20% for the gas barrier resin layer (C), 10 to 50% for the intermediate resin layer (D1) and 5 to 25% for the ionomer resin layer (B). When the adhesive layer is arranged, the thickness thereof is about 1 to 5 μm. When the kinds of the resins forming the intermediate resin layer (D1) and adhesive layer are the same, the thickness of the intermediate resin layer is a total value thereof.

The thermoplastic multi-layer films according to the present invention improve in sealing strength upon impact and self-welding property while making the best use of the features of the ionomer resin that it can provide a multi-layer film having good stretchability and excellent heat shrinkability, and are hence suitable for use as various kinds of food packaging films.

EXAMPLES

The present invention will hereinafter be described more specifically by the following Examples and Comparative Examples. Incidentally, measuring methods of physical properties and resins used in the examples are as follows.

〈Measuring methods of physical properties〉

(1) Hot-water shrink:

After a multi-layer film sample marked at distances of 10 cm in its stretching direction and a direction perpendicular to this direction was immersed for 10 seconds in hot water controlled to 75°C, it was taken out of the hot water and immediately cooled with water of ordinary temperature. Thereafter, a distance between the marks was measured to find a difference by subtracting this measured value from 10 cm. A proportion of the difference to 10 cm was expressed in terms of percentage. The test was run 5 times to express the hot-water shrink of the sample by an average value.

(2) Self-welding property:

1. Visual judgment:

A tubular multi-layer film was sealed at its bottom to obtain a bag sample in which raw meat (beef) was then placed, followed by vacuum packaging. This package was dipped for 1 second in hot water of 75°C to shrink the film, and then quenched with ice water. After the package was left to stand for 2 weeks in a refrigerator controlled to 5°C, a state of drip (meat juice) present in an edge part (a portion of the film the inner surfaces of which came into contact with each other in no contact with the raw meat) of the film was visually observed to judge the self-welding property of the sample in accordance with the following standard:

○: The drip existed in the edge part, but was not very conspicuous;
X: The drip existed in most of the edge part.

2. Measurement of adhesive force between inner surfaces:

After a sample obtained in the same manner as in the test 1. was left to stand for a day in a refrigerator controlled to 5°C, the adhesive force between the inner surfaces at the edge part of the sample was measured by the following method. The measured value was expressed in terms of average strength.

Measuring instrument: Tensile tester, Tensilon RTM-100 manufactured by Orientec Co.
Distance between crossheads: 20 mm
Crosshead speed: 200 mm/min
Sample width: 15 mm
Atmospheric temperature: about 23°C
Atmospheric relative humidity: about 50%.

(3) Sealing strength:

A tubular multi-layer film was heat-sealed by a sealing bar heated to 240°C to produce a bag sample for measuring sealing strength. After the sample was left to stand for a day in a thermostatic chamber controlled to 23°C, it was transferred to a thermostatic chamber controlled to 5°C and left to stand for at least 3 hours. Thereafter, the bag sample was fixed, and a ball 5 kg in weight was dropped on a sealed part of the bag sample through an opening of the bag sample. The height from which the ball was dropped was determined on a position of 70 cm from the sealed part of the bag sample. The drop-ball test was run at most 5 times per sample. This test was conducted about 10 samples, and the sealing strength is expressed in terms of the number of bags broken at their sealed parts.

(4) Stretchability:

On the basis of the stability of a stretched bubble formed by a tubular film extrusion process, the stretchability of each multi-layer film sample was judged in accordance with the following standard:

○: A film could be formed by the tubular film extrusion process, and the stretched bubble scarcely fluctuated;
△: A film could be formed by the tubular film extrusion process, but the stretched bubble fluctuated and was lacking in stability;

X:      A film could not be formed by the tubular film extrusion process.

(5) Ionization degree of ionomer resin:

① Demetallization treatment:

After an ionomer resin sample was immersed for 4 hours at 60°C in a mixed solution of 200 ml of methanol/25 g of concentrated hydrochloric acid, the resin sample was recovered by filtration at room temperature and washed with methanol.

② Determination of metal content:

The mixed solution of hydrochloric acid/methanol was separated, and the amount of metals contained in the solution was determined by ICP (inductively coupled plasma emission spectrometry).

③ Determination of acid content:

The resin obtained in the step ① was dried under reduced pressure at 50°C for 2 hours. The resin thus dried was subjected to NMR spectroscopy to calculate an acid content (mol%) in the resin.

④ Calculation of ionization degree (neutralization degree):

On the basis of the above results, the ionization degree of the resin sample was found in accordance with the following equation:

$$\text{Ionization degree (\%)} = (a/b) \times 100$$

wherein a is the metal content in the resin sample, and b is the acid content in the resin sample.

〈Resins used〉

(1) VLDPE-1:

- Linear very low density polyethylene; MORETEC V0398CN, product of Idemitsu Petrochemical Co., Ltd.,;
- Density = 0.907 g/cm$^3$;
- Melt flow rate (MFR) = 3.3 g/10 min.

(2) VLDPE-2:

- Linear very low density polyethylene; AFFINITY FW 1650, product of Dow Chemical Company;
- Density = 0.902 g/cm$^3$;
- MFR = 3.0 g/10 min.

(3) EVA-1:

- Ethylene-vinyl acetate copolymer;
- Density = 0.94 g/cm$^3$;
- MFR = 2.0 g/10 min;
- Vinyl acetate content: 19 wt.%.

(4) EVA-2:

- Ethylene-vinyl acetate copolymer;
- Density = 0.94 g/cm$^3$;
- MFR = 2.5 g/10 min;
- Vinyl acetate content = 15 wt.%.

(5) EEA:

- Ethylene-ethyl acrylate copolymer;
- Density = 0.94 g/cm$^3$;
- MFR = 4.0 g/10 min;
- Ethyl acrylate content = 15 wt.%.

(6) PVDC:

- Vinylidene chloride-vinyl chloride copolymer = 82/18 wt.%;
- Containing 0.86 parts by weight of dibutyl sebacate and 2.3 parts by weight of epoxidized soybean oil per 100 parts by weight of the copolymer.

(7) EMAA-IBA:

- Ethylene-methacrylic acid-isobutyl acrylate terpolymer;
- Density = 0.94 g/cm$^3$;
- MFR = 2.4 g/10 min;
- Methacrylic acid content = 12 wt.%;
- Isobutyl acrylate content = 6 wt.%.

(8) Ionomer resins:

Ionomer resins shown in Table 1 were used. Cations contained in the ionomer resins are all Na$^+$.

Table 1

| Ionomer resin | Composition of copolymer (wt.%) | | | Ionization degree (%) | MFR (g/10 min) |
|---|---|---|---|---|---|
| | Ethylene | Methacrylic acid | Isobutyl Acrylate ester | | |
| 1 | 82 | 12 | 6 | 25 | 1.5 |
| 2 | 82 | 12 | 6 | 4 | 1.8 |
| 3 | 82 | 12 | 6 | 15 | 0.8 |
| 4 | 83 | 10 | 7 | 50 | 1.7 |
| 5 | 85 | 15 | 0 | 30 | 2.8 |

[Example 1]

A polyvinylidene chloride-vinyl chloride copolymer (PVDC), linear very low density polyethylene (VLDPE-1), an ethylene-vinyl acetate copolymer (EVA-1), an ethylene-vinyl acetate copolymer (EVA-2), an ethylene-ethyl acrylate copolymer (EEA) and an ionomer resin (Ionomer-1) were separately extruded through 6 extruders to introduce the respective molten polymers thus extruded into a co-extrusion ring die. In the die, the molten polymers were melt-bonded in order of (VLDPE-1)/(EVA-1)/(EEA)/(PVDC)/(EEA) /(EVA-2)/(Ionomer-1) from an outer layer to an inner layer, thereby co-extruding them into 7 layers through the die. The resin temperature of the molten tubular body at a die opening was 200°C. This molten tubular body was cooled by showering cold water of 10-20°C to obtain a flat tubing having a flat width of 138 mm and a thickness of 558 μm. The flat tubing was exposed to electron beam in an electron beam irradiation apparatus of acceleration voltage of 300 keV to give the tubing an exposure dose of 80 kGy. The thus-treated tubing was then caused to pass through a hot water tank of 82°C and simultaneously biaxially Stretched 3.1 times in a machine direction and 3.0 times in a transverse direction by a tubular film extrusion process while cooling the tubing at 10°C by an air ring. The biaxially stretched multi-layer film thus obtained had a flat width of 416 mm and a total thickness of 60 μm. The constitution of the thickness was 3 μm/22 μm/1.5 μm/7 μm/ 1.5 μm/21 μm/4 μm in order from the outer layer.

[Example 2]

A biaxially stretched multi-layer film was produced in the same manner as in Example 1 except that (a 6:4 mixture of Ionomer-1 and Ionomer-2) was used in place of (Ionomer-1) used in Example 1, and the layer structure was changed to (VLDPE-1)/(EVA-1)/(EEA)/(PVDC)/(EEA)/(EVA-2)/(mixture of Ionomer-1 and Ionomer-2) in order from the outer layer to the inner layer.

[Example 3]

A biaxially stretched multi-layer film was produced in the same manner as in Example 1 except that (VLDPE-2) was used in place of (VLDPE-1) used in Example 1, the layer structure was changed to (VLDPE-2)/(EVA-1)/(EEA)/(PVDC) /(EEA)/(EVA-2)/(Ionomer-1), and the constitution of the thickness was changed to 3 μm/22 μm/1.5 μm/7 μm/ 1.5 μm/17 μm/8 μm in order from the outer layer.

[Example 4]

A biaxially stretched multi-layer film was produced in the same manner as in Example 2 except that (VLDPE-2) and (EMAA-IBA) were used in place of (VLDPE-1) and (EVA-1) used in Example 2, respectively, the layer structure was changed to (VLDPE-2)/(EMAA-IBA)/(EEA)/(PVDC)/(EEA)/(EVA-2)/(mixture of Ionomer-1 and Ionomer-2), and the constitution of the thickness was changed to 3 μm/22 μm/1.5 μm/7 μm/1.5 μm/22 μm/3 μm in order from the outer layer.

[Example 5]

A polyvinylidene chloride-vinyl chloride copolymer (PVDC), an ethylene-vinyl acetate copolymer (EVA-2) and an ionomer resin (a 5:5 mixture of Ionomer-1 and Ionomer-3) were separately extruded through 4 extruders to introduce the respective molten polymers thus extruded into a co-extrusion ring die. In the die, the molten polymers were melt-bonded in order of (EVA-2)/(EVA-2)/(PVDC)/(EVA-2)/ (EVA-2)/(mixture of Ionomer-1 and Ionomer-3) from an outer layer to an inner layer, thereby co-extruding them into 6 layers through the die. The resin temperature of the molten tubular body at a die opening was 200°C. This molten tubular body was cooled by showering cold water of 10-20°C to obtain a flat tubing having a flat width of 138 mm and a thickness of 614 μm. The flat tubing was exposed to electron beam in an electron beam irradiation apparatus of acceleration voltage of 200 keV to give the tubing an exposure dose of 80 kGy. The thus-treated tubing was then caused to pass through a hot water tank of 82°C and simultaneously biaxially stretched 3.3 times in a machine direction and 3.0 times in a transverse direction by a tubular film extrusion process while cooling the tubing at 10°C by an air ring. The biaxially stretched multi-layer film thus obtained had a flat width of 416 mm and a thickness of 62 μm. The constitution of the thickness was 20 μm/1 μm/7 μm/ 1 μm/28 μm/5 μm in order from the outer layer.

The layer structures and test results of physical properties of the multi-layer films obtained in Examples 1 to 5 are shown collectively in Table 2.

## Table 2

| | | | | Example | | | | |
|---|---|---|---|---|---|---|---|---|
| | | | | 1 | 2 | 3 | 4 | 5 |
| Structure of laminated film | First layer | Resin | | VLDPE-1 | VLDPE-1 | VLDPE-2 | VLDPE-2 | EVA-2 |
| | | Thickness | | 3 μm | 3 μm | 3 μm | 3 μm | 20 μm |
| | Second layer | Resin | | EVA-1 | EVA-1 | EVA-1 | EMAA-IBA | - |
| | | Thickness | | 22 μm | 22 μm | 22 μm | 22 μm | - |
| | Third layer | Resin | | EEA | EEA | EEA | EEA | EVA-2 |
| | | Thickness | | 1.5 μm | 1.5 μm | 1.5 μm | 1.5 μm | 1 μm |
| | Fourth layer | Resin | | PVDC | PVDC | PVDC | PVDC | PVDC |
| | | Thickness | | 7 μm | 7 μm | 7 μm | 7 μm | 7 μm |
| | Fifth layer | Resin | | EEA | EEA | EEA | EEA | EVA-2 |
| | | Thickness | | 1.5 μm | 1.5 μm | 1.5 μm | 1.5 μm | 1 μm |
| | Sixth layer | Resin | | EVA-2 | EVA-2 | EVA-2 | EVA-2 | EVA-2 |
| | | Thickness | | 21 μm | 21 μm | 17 μm | 22 μm | 28 μm |
| | Seventh layer | Resin (weight ratio) | | Ionomer-1 | Ionomer-1 Ionomer-2 = (6/4) | Ionomer-1 | Ionomer-1 Ionomer-2 = (6/4) | Ionomer-1 Ionomer-3 = (5/5) |
| | | Thickness | | 4 μm | 4 μm | 8 μm | 3 μm | 5 μm |
| Ionization degree of ionomer resin (%) | | | | 25 | 17 | 25 | 17 | 20 |
| Thickness ratio of 6th layer/7th layer | | | | 5.3 | 5.3 | 2.1 | 7.3 | 5.8(*1) |
| Draw ratio MD/TD (times) | | | | 3.1/3.0 | 3.1/3.0 | 3.1/3.0 | 3.1/3.0 | 3.3/3.0 |
| Stretchability | | | | ○ | ○ | ○ | ○ | ○ |
| Hot-water shrink (%) MD/TD (75°C) | | | | 43/47 | 42/46 | 44/48 | 42/46 | 40/47 |
| Sealing strength (rate of broken bag) | | | | 1/10 | 0/10 | 2/10 | 0/10 | 0/10 |
| Self-welding property | | Visual | | ○ | ○ | ○ | ○ | ○ |
| | | Adhesive force (gf/15 mm) | | 440 | 460 | 460 | 430 | 440 |

(*1) In this case, a thickness ratio of (fifth layer + sixth layer)/seventh layer.

[Comparative Example 1]

A biaxially stretched film was produced in the same manner as in Example 1 except that (Ionomer-4) was used in place of (Ionomer-1) used in Example 1, and the layer structure was changed to (VLDPE-1)/(EVA-1)/(EEA)/(PVDC)/(EEA) /(EVA-2)/(Ionomer-4) in order from the outer layer to the inner layer.

[Comparative Example 2]

A biaxially stretched multi-layer film was produced in the same manner as in Example 1 except that the constitution of the thickness in Example 1 was changed to 3 μm/22 μm/1.5 μm/7 μm/1.5 μm/11 μm/14 μm in order from the outer layer.

[Comparative Example 3]

A biaxially stretched multi-layer film was produced in the same manner as in Example 4 except that (Ionomer-5) was used in place of (mixture of Ionomer-1 and Ionomer-2) used in Example 4, the layer structure was changed to (VLDPE-2)/(EMAA-IBA)/(EEA)/(PVDC)/(EEA)/(EVA-2)/(Ionomer-5) in order from the outer layer to the inner layer, and the constitution of the thickness was changed to 3 µm/22 µm/1.5 µm/7 µm/1.5 µm/15 µm/10 µm in order from the outer layer.

[Comparative Example 4]

A biaxially stretched multi-layer film was produced in the same manner as in Example 4 except that (VLDPE-2) was used in place of (mixture of Ionomer-1 and Ionomer-2) used in Example 4, and the layer structure was changed to (VLDPE-2)/(EMAA-IBA)/(EEA)/(PVDC)/(EEA)/(EVA-2)/(VLDPE-2) in order from the outer layer to the inner layer.

The layer structures and test results of physical properties of the multi-layer films obtained in Comparative Examples 1 to 4 are shown collectively in Table 3.

## Table 3

| | | | Comparative Example | | | |
|---|---|---|---|---|---|---|
| | | | 1 | 2 | 3 | 4 |
| Structure of laminated film | First layer | Resin | VLDPE-1 | VLDPE-1 | VLDPE-2 | VLDPE-2 |
| | | Thickness | 3 µm | 3 µm | 3 µm | 3 µm |
| | Second layer | Resin | EVA-1 | EVA-1 | EMAA-IBA | EMAA-IBA |
| | | Thickness | 22 µm | 22 µm | 22 µm | 22 µm |
| | Third layer | Resin | EEA | EEA | EEA | EEA |
| | | Thickness | 1.5 µm | 1.5 µm | 1.5 µm | 1.5 µm |
| | Fourth layer | Resin | PVDC | PVDC | PVDC | PVDC |
| | | Thickness | 7 µm | 7 µm | 7 µm | 7 µm |
| | Fifth layer | Resin | EEA | EEA | EEA | EEA |
| | | Thickness | 1.5 µm | 1.5 µm | 1.5 µm | 1.5 µm |
| | Sixth layer | Resin | EVA-2 | EVA-2 | EVA-2 | EVA-2 |
| | | Thickness | 21 µm | 11 µm | 15 µm | 22 µm |
| | Seventh layer | Resin | Ionomer-4 | Ionomer-1 | Ionomer-5 | VLDPE-2 |
| | | Thickness | 4 µm | 14 µm | 10 µm | 3 µm |
| Ionization degree of ionomer resin (%) | | | 50 | 25 | 30 | - |
| Thickness ratio of 6th layer/7th layer | | | 5.3 | 0.8 | 1.5 | 7.3 |
| Draw ratio MD/TD (times) | | | 3.1/3.0 | 3.1/3.0 | 3.1/3.0 | 3.1/3.0 |
| Stretchability | | | ○ | ○ | ○ | △ |
| Hot-water shrink (%) MD/TD (75°C) | | | 41/45 | 42/46 | 41/44 | 39/38 |
| Sealing strength (rate of broken bag) | | | 10/10 | 5/10 | 10/10 | 0/10 |
| Self-welding property | Visual | | ○ | ○ | ○ | × |
| | Adhesive force (gf/15 mm) | | 420 | 430 | 380 | 10 |

## INDUSTRIAL APPLICABILITY

According to the present invention, there can be provided thermoplastic multi-layer films which are excellent in sealing properties such as sealing strength upon impact, and self-welding property while retaining properties such as good stretchability and heat shrinkability that the ionomer resin layer has. The thermoplastic multi-layer films according to the present invention are suitable for use as a packaging film for food.

**Claims**

1. A thermoplastic multi-layer film comprising a gas barrier resin layer (C) and at least one intermediate resin layer (D) between an outer resin layer (A) and an inner sealing resin layer (B), wherein

   (1) the inner sealing resin layer (B) is a layer (B1) of an ionomer resin having an ionization degree higher than 15%, but not higher than 25%,
   (2) an intermediate resin layer (D1) is laminated in direct contiguity with the ionomer resin layer (B1), and
   (3) the thickness of the intermediate resin layer (D1) is greater than the thickness of the ionomer resin layer (B1).

2. The thermoplastic multi-layer film according to Claim 1, wherein the ionomer resin layer (B1) is a layer formed of at least one ionomer resin selected from the group consisting of resins obtained by neutralizing carboxyl groups in ethylene-ethylenically unsaturated carboxylic acid copolymers with a cation and resins obtained by neutralizing carboxyl groups in ethylene-ethylenically unsaturated carboxylic acid-ethylenically unsaturated carboxylic ester terpolymers with a cation.

3. The thermoplastic multi-layer film according to Claim 2, wherein the ethylene-ethylenically unsaturated carboxylic acid-ethylenically unsaturated carboxylic ester terpolymer are terpolymers composed of 70 to 91 wt.% of ethylene, 5 to 15 wt.% of (meth)acrylic acid and 4 to 15 wt.% of a (meth)acrylic ester.

4. The thermoplastic multi-layer film according to Claim 2, wherein the ionomer resin is a blend of at least two neutralized resins each having a different ionization degree, and the ionization degree of the blend falls within a range of from higher than 15% to not higher than 25%.

5. The thermoplastic multi-layer film according to Claim 1, wherein the intermediate resin layer (D1) is a polyolefin resin layer ($PO_1$).

6. The thermoplastic multi-layer film according to Claim 5, wherein the polyolefin resin layer ($PO_1$) is a layer formed of at least one polyolefin resin selected from the group consisting of ethylene-vinyl acetate copolymers, ethylene-acrylic ester copolymers and ethylene-methacrylic acid-acrylic ester terpolymers.

7. The thermoplastic multi-layer film according to Claim 1, wherein a polyolefin resin layer (PO) of the outer resin layer (A) is a layer formed of at least one polyolefin resin selected from the group consisting of linear low density polyethylene, very or ultra low density polyethylene and ethylene-vinyl acetate copolymers having a vinyl acetate content of 20 wt.% or lower.

8. The thermoplastic multi-layer film according to Claim 1, wherein the gas barrier resin layer (C) is a layer formed of a vinylidene chloride resins, ethylene-vinyl alcohol copolymer or polyamide resin.

9. The thermoplastic multi-layer film according to Claim 1, wherein an intermediate resin layer (D2) is arranged in contiguity with the outer resin layer (A).

10. The thermoplastic multi-layer film according to Claim 9, wherein a polyolefin resin layer ($PO_2$) of the intermediate resin layer (D2) is a layer formed of at least one polyolefin resin selected from the group consisting of ethylene-vinyl acetate copolymers, ethylene-acrylic ester copolymers, ethylene-methacrylic acid-isobutyl acrylate terpolymers and ionomer resins.

11. The thermoplastic multi-layer film according to Claim 1, wherein the thickness of the intermediate resin layer (D1) is 2 to 10 times the thickness of the ionomer resin layer (B1).

12. The thermoplastic multi-layer film according to Claim 1, which is stretched at a draw ratio of 2 to 7 times in at least a monoaxial direction.

13. The thermoplastic multi-layer film according to Claim 1, which is crosslinked by ionizing radiation.

14. The thermoplastic multi-layer film according to Claim 1, wherein an intermediate resin layer (D2) and an adhesive layer are optionally arranged, and the multi-layer film has the following layer structure:

(i) outer resin layer (A)/intermediate resin layer (D2)/adhesive layer/gas barrier resin layer (C)/adhesive layer/intermediate resin layer (D1)/inner sealing resin layer (B);

(ii) outer resin layer (A)/intermediate resin layer (D2)/adhesive layer/gas barrier resin layer (C)/intermediate resin layer (D1)/inner sealing resin layer (B);

(iii) outer resin layer (A)/adhesive layer/gas barrier resin layer (C)/adhesive layer/intermediate resin layer (D1)/inner sealing resin layer (B);

(iv) outer resin layer (A)/adhesive layer/gas barrier resin layer (C)/intermediate resin layer (D1)/inner sealing resin layer (B);

(v) outer resin layer (A)/intermediate resin layer (D2)/gas barrier resin layer (C)/adhesive layer/intermediate resin layer (D1)/inner sealing resin layer (B);

(vi) outer resin layer (A)/intermediate resin layer (D2)/ gas barrier resin layer (C)/intermediate resin layer (D1)/inner sealing resin layer (B);

(vii) outer resin layer (A)/gas barrier resin layer (C)/adhesive layer/intermediate resin layer (D1)/inner sealing resin layer (B);

(viii) outer resin layer (A)/gas barrier resin layer (C)/intermediate resin layer (D1)/inner sealing resin layer (B); or

(ix) outer resin layer (A)/intermediate resin layer (D1)/inner sealing resin layer (B).

15. A thermoplastic multi-layer film comprising at least an inner sealing resin layer (B) and a resin layer (D1) laminated in direct contiguity with the inner sealing resin layer, wherein

(1) the inner sealing resin layer (B) is a layer (B1) of an ionomer resin having an ionization degree higher than 15%, but not higher than 25%,

(2) the resin layer (D1) is a polyolefin resin layer ($PO_1$) laminated in direct contiguity with the ionomer resin layer (B1),

(3) the thickness of the polyolefin resin layer ($PO_1$) is 4.5 to 10 times the thickness of the ionomer resin layer (B1), and

(4) the multi-layer film is irradiation-crosslinked by ionizing radiation.

## INTERNATIONAL SEARCH REPORT

| International application No. |
|---|
| PCT/JP99/00359 |

**A. CLASSIFICATION OF SUBJECT MATTER**
Int.Cl⁶ B32B27/28

According to International Patent Classification (IPC) or to both national classification and IPC

**B. FIELDS SEARCHED**

Minimum documentation searched (classification system followed by classification symbols)
Int.Cl⁶ B32B27/28

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 58-215437, A (E.I. Du Pont de Nemours & Co.), 14 December, 1983 (14. 12. 83) & EP, 94991, A & US, 4346196, A & AU, 8284047, A | 1-15 |
| Y | JP, 3-164245, A (W.R. Grace & Co.-Connecticut), 16 July, 1991 (16. 07. 91) & US, 5075143, A & AU, 9063282, A | 1-15 |
| P | JP, 10-34800, A (Kureha Chemical Industry Co., Ltd.), 10 February, 1998 (10. 02. 98) & KR, 98008554, A | 1-15 |

☐ Further documents are listed in the continuation of Box C.  ☐ See patent family annex.

| * Special categories of cited documents: | "T" later document published after the international filing date or priority |
|---|---|
| "A" document defining the general state of the art which is not considered to be of particular relevance | date and not in conflict with the application but cited to understand the principle or theory underlying the invention |
| "E" earlier document but published on or after the international filing date | "X" document of particular relevance; the claimed invention cannot be considered novel or cannot be considered to involve an inventive step |
| "L" document which may throw doubts on priority claim(s) or which is cited to establish the publication date of another citation or other special reason (as specified) | when the document is taken alone |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 16 April, 1999 (16. 04. 99) | 27 April, 1999 (27. 04. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)